# EUROPEAN PATENT APPLICATION

(11) **EP 4 353 983 A1**
(43) Veröffentlichungstag der Anmeldung: **17.04.2024**
(21) Anmeldenummer: 21944619.2
(22) Anmeldetag: 11.06.2021
(51) Int. Cl.: F16C 33/48, F16C 33/49, F16C 23/08, F16C 19/38

(54) **HALTER FÜR SELBSTAUSRICHTENDES ROLLENLAGER UND SELBSTAUSRICHTENDES ROLLENLAGER**

(71) Anmelder: Schaeffler Technologies AG & Co. KG, 91074 Herzogenaurach (DE)
(72) Erfinder: LIU, Jixuan, Shanghai 200336 (CN); LV, Yaofeng, Shanghai (CN); GAO, Rong, Kunshan, Jiangsu 215332 (CN); XIA, Houqiao, Shanghai (CN); HUANG, Yunsheng, Kunshan, Jiangsu 215300 (CN); CHENG, Tao, Shanghai 200435 (CN)
(86) Internationale Anmeldenummer: PCT/CN2021/099686
(87) Internationale Veröffentlichungsnummer: WO 2022/257110

(57) **Zusammenfassung**

Es wird ein Käfig für ein Pendelrollenlager bereitgestellt, der einen zentralen ringförmigen Teil (41) und Stege (42) umfasst. Die Stege (42) sind in axialer Richtung an zwei Seitenflächen des zentralen ringförmigen Teils (41) befestigt. Der zentrale ringförmige Teil (41) umfasst hervorstehende Teile (411), die zu Positionen hervorstehen, die näher an den Außenseiten in radialer Richtung liegen als die Stege (42). Der Käfig (4) umfasst ferner Verstärkungsteile (43, 43', 43"), die an dem zentralen ringförmigen Teil (41) und den Stegen (42) befestigt sind, und die Verstärkungsteile (43, 43', 43") sind an den Außenseiten der Stege (42) in radialer Richtung angeordnet und an den Außenseiten der hervorstehenden Teile (411) in axialer Richtung angeordnet. In Querschnitten, die entlang der axialen Richtung (A) und der radialen Richtung (R) ausgeschnitten sind, erstreckt sich mindestens ein Teil einer Konturlinie von Außenseitenflächen (43s, 43"s) der Verstärkungsteile (43, 43', 43") in axialer Richtung zur Innenseite in radialer Richtung, während er sich zur Außenseite in axialer Richtung erstreckt. Des Weiteren wird ein Pendelrollenlager bereitgestellt, das den vorstehend erwähnten Käfig umfasst. Dadurch wird die Verbindungsfestigkeit der Verbindungsteile zwischen den Stegen und dem zentralen ringförmigen Teil wirksam verbessert und die Lebensdauer des Pendelrollenlagers wirksam verlängert.

## Beschreibung

### Technisches Gebiet

Die vorliegende Anmeldung betrifft das Gebiet der Lager und insbesondere einen Käfig für ein Pendelrollenlager und ein Pendelrollenlager, das den Käfig umfasst.

### Stand der Technik

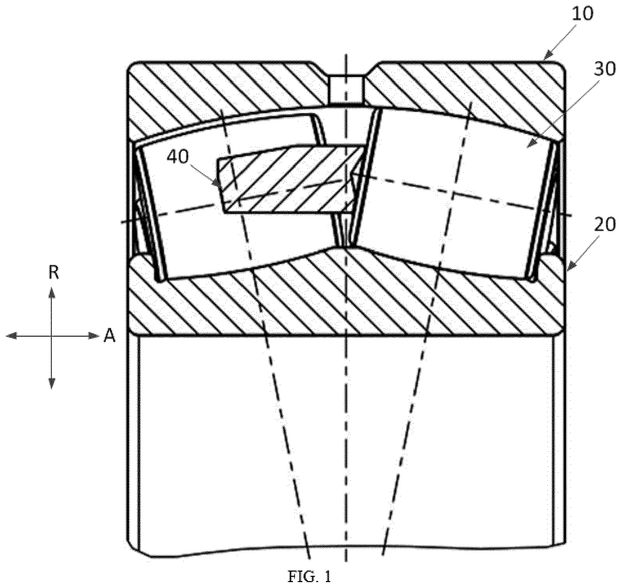

Da eine Welle in einem Getriebe eines Walzwerks anfällig für Auslenkung ist, wird häufig ein Pendelrollenlager mit einer bestimmten selbstausrichtenden Funktion zur Lagerung der Welle ausgewählt. Wie in FIG. 1 dargestellt, umfasst ein typisches Pendelrollenlager einen Außenring 10, einen Innenring 20, Wälzkörper 30 und einen Käfig 40. Der Außenring 10 und der Innenring 20 können relativ zueinander drehen. Auf dem Außenring 10 ist eine äußere Laufbahn für das Rollen zweier Reihen von Wälzkörpern 30 gebildet. Auf dem Innenring 20 sind zwei innere Laufbahnen für das jeweilige Rollen der beiden Reihen von Wälzkörpern 30 gebildet. Die Wälzkörper 30 sind in zwei Reihen aufgeteilt und jeweils in Taschen zwischen Stegen des Käfigs 40 eingebaut. Der Käfig 40 hält die Wälzkörper 30 zwischen dem Außenring 10 und dem Innenring 20, um die beiden Reihen der Wälzkörper 30 zu begrenzen. Ein zentraler ringförmiger Teil des Käfigs 40 steht zu einer Außenseite in radialer Richtung nicht weiter als die Stege hervor, und zwischen dem zentralen ringförmigen Teil und dem Außenring besteht ein größerer Spalt. Das Pendelrollenlager gehört zu den Pendelrollenlagern, bei denen der Käfig durch die Wälzkörper geführt wird.

Wenn das in FIG. 1 gezeigte Pendelrollenlager auf das Getriebe des Walzwerks angewendet wird, sorgt das Getriebe des Walzwerks dafür, dass das Pendelrollenlager dadurch, dass das Walzwerk ein Pressen und Rollen durchführt, einen offensichtlichen sofortigen Umfangsstoß trägt, so dass eine bestimmte Umfangsstoßkraft zwischen den Wälzkörpern 30 und dem Käfig 40 innerhalb des Pendelrollenlagers erzeugt wird. Eine solche Umfangsstoßkraft erzeugt eine größere Stoßbelastung auf die Stege des Käfigs 40, so dass Verbindungsteile zwischen den Stegen und dem zentralen ringförmigen Teil des Käfigs 40 anfällig für Bruch sind, was zu Schäden am Pendelrollenlager führt.

### Zusammenfassung der Erfindung

Die Aufgaben der vorliegenden Anmeldung bestehen darin, die Mängel des vorstehend angeführten Standes der Technik zu überwinden oder zumindest zu verringern und einen neuartigen Käfig für ein Pendelrollenlager bereitzustellen, der das Risiko eines Bruchs von Stegen des Käfigs bei einer Umfangsstoßbelastung durch Wälzkörper verringern kann. Darüber hinaus ist ein Pendelrollenlager bereitgestellt, das den vorstehenden Käfig umfasst und die gleiche Wirkung hat.

Um die vorstehend erwähnten Aufgaben zu erfüllen, werden in der vorliegenden Anmeldung die nachfolgenden technischen Lösungen angewandt.

Die vorliegende Anmeldung stellt einen Käfig für ein Pendelrollenlager bereit. Der Käfig ist als eine Ringform gebildet und umfasst einen zentralen ringförmigen Teil und eine Vielzahl von aneinander befestigten Stegen, wobei sich der zentrale ringförmige Teil durchgehend über einen gesamten Umfang entlang einer Umfangsrichtung des Käfigs erstreckt, sich jeder der Stege um eine vorbestimmte Länge entlang einer axialen Richtung des Käfigs erstreckt und die Stege an zwei Seitenflächen des zentralen ringförmigen Teils in axialer Richtung befestigt sind; die Vielzahl der Stege auf jeder Seite des zentralen ringförmigen Teils in der axialen Richtung in Abständen in der Umfangsrichtung angeordnet ist, so dass Taschen, in denen Wälzkörper des Pendelrollenlagers eingebaut sind, zwischen jeweils zwei in Umfangsrichtung benachbarten Stegen gebildet werden;
der zentrale ringförmige Teil umfasst hervorstehende Teile, die zu Positionen hervorstehen, die näher an den Außenseiten in einer radialen Richtung des Käfigs liegen als die Stege, wobei der Käfig ferner Verstärkungsteile umfasst, die am zentralen ringförmigen Teil und den Stegen befestigt sind, und die Verstärkungsteile an Außenseiten der Stege in radialer Richtung angeordnet sind und an Außenseiten der hervorstehenden Teile in axialer Richtung angeordnet sind;
an Teilen des Käfigs, an denen die Stege angeordnet sind, in Querschnitten, die entlang der axialen Richtung und der radialen Richtung ausgeschnitten sind, erstreckt sich mindestens ein Teil einer Konturlinie von Außenseitenflächen der Verstärkungsteile in axialer Richtung zu einer Innenseite in radialer Richtung, während er sich zu einer Außenseite in axialer Richtung erstreckt.

Vorzugsweise erstreckt sich die Konturlinie der Außenseitenflächen in axialer Richtung von einer Außenumfangsfläche des zentralen ringförmigen Teils zu Außenseitenflächen der Stege in radialer Richtung.

Besonders bevorzugt nimmt dadurch, dass sich die Außenseitenflächen in axialer Richtung von den Stegen zu dem zentralen ringförmigen Teil erstrecken, eine Breite der Außenseitenflächen in axialer Richtung in Umfangsrichtung allmählich zu. Besonders bevorzugt ist die Anzahl der Stege auf einer Seite des zentralen ringförmigen Teils in axialer Richtung gleich jener der Stege auf der anderen Seite des zentralen ringförmigen Teils in axialer Richtung und die Stege auf einer Seite des zentralen ringförmigen Teils in axialer Richtung sind mit den Stegen auf der anderen Seite des zentralen ringförmigen Teils in axialer Richtung in Umfangsrichtung ausgerichtet.

Besonders bevorzugt sind an einem Außenumfangsabschnitt des Käfigs zwei fehlende Teile am Käfig gebildet, und die beiden fehlenden Teile sind in Bezug auf einen Kreismittelpunkt des Käfigs um 180 Grad abgelenkt.

Besonders bevorzugt ist eine Mittelposition jedes der fehlenden Teile zwischen zwei in Umfangsrichtung benachbarten Stegen angeordnet.

Besonders bevorzugt sind in einer Vorderansicht entlang der axialen Richtung betrachtet die Konturlinien von Teilen des Käfigs, an denen die fehlenden Teile gebildet sind, gerade Linien oder Kurven, die zur Außenseite in radialer Richtung hervorstehen. Besonders bevorzugt sind an den Teilen des Käfigs, an denen die Stege angeordnet sind, in Querschnitten, die entlang der radialen Richtung von Wälzkörpern ausgeschnitten sind und senkrecht zur axialen Richtung der Wälzkörper sind, Konturlinien der Seitenflächen der Verstärkungsteile in Umfangsrichtung gerade Linien oder Kurven.

Die vorliegende Anmeldung stellt ferner ein Pendelrollenlager wie folgt bereit, das einen Käfig für ein Pendelrollenlager gemäß einer der vorstehenden technischen Lösungen umfasst.

Vorzugsweise umfasst das Pendelrollenlager ferner einen Außenring, einen Innenring und eine Vielzahl von Wälzkörpern, wobei die Wälzkörper in Taschen des Käfigs eingebaut sind und durch den Käfig zwischen dem Außenring und dem Innenring gehalten werden und eine Außenumfangsfläche des zentralen ringförmigen Teils des Käfigs in ihrer Form an eine Laufbahn des Außenrings angepasst ist.

Besonders bevorzugt sind die Stege und die Verstärkungsteile derart ausgestaltet, dass die Wälzkörper nur mit den Stegen in Kontakt kommen können und im Arbeitsvorgang der Wälzkörper, die in den Taschen eingebaut sind, von den Verstärkungsteilen beabstandet sind.

Besonders bevorzugt sind die Seitenflächen der Stege in Umfangsrichtung als an die Konturen der Wälzkörper angepasste Formen gebildet.

In jedem der Querschnitte, die entlang der radialen Richtung der Wälzkörper ausgeschnitten sind und senkrecht zur axialen Richtung der Wälzkörper sind, gilt unter der Annahme, dass ein Kreismittelpunkt der Querschnitte der Wälzkörper O ist, ein äußerster Punkt der Konturlinie in radialer Richtung der Seitenflächen der Stege in Umfangsrichtung P ist und jeder Punkt auf der Konturlinie der Seitenflächen der Verstärkungsteile in Umfangsrichtung, der den Stegen entspricht, Q ist, als erfüllt, dass ein Abstand zwischen Punkt O und Punkt Q immer größer ist als ein Abstand zwischen Punkt O und Punkt P.

Durch die Übernahme der vorstehenden technischen Lösung stellt die vorliegende Anmeldung einen neuartigen Käfig für ein Pendelrollenlager und ein Pendelrollenlager, das diesen umfasst, bereit. Der Käfig ist als eine Ringform gebildet und umfasst einen zentralen ringförmigen Teil und aneinander befestigte Stege. Der zentrale ringförmige Teil erstreckt sich durchgehend über einen gesamten Umfang entlang einer Umfangsrichtung des Käfigs. Jeder der Stege erstreckt sich über eine vorbestimmte Länge entlang einer axialen Richtung des Käfigs, und die Stege sind an zwei Seitenflächen des zentralen ringförmigen Teils in der axialen Richtung befestigt. Auf jeder Seite des zentralen ringförmigen Teils in der axialen Richtung ist die Vielzahl von Stegen in Abständen in der Umfangsrichtung angeordnet, so dass Taschen, in denen Wälzkörper des Pendelrollenlagers eingebaut sind, zwischen jeweils zwei in Umfangsrichtung benachbarten Stegen gebildet werden. Darüber hinaus umfasst der zentrale ringförmige Teil hervorstehende Teile, die zu den Positionen hervorstehen, die näher an den Außenseiten in radialer Richtung des Käfigs liegen als die Stege. Der Käfig umfasst ferner Verstärkungsteile, die an dem zentralen ringförmigen Teil und den Stegen befestigt sind, und die Verstärkungsteile sind an den Außenseiten der Stege in radialer Richtung angeordnet und an den Außenseiten der hervorstehenden Teile in axialer Richtung angeordnet. An Teilen des Käfigs, an denen die Stege angeordnet sind, erstreckt sich in Querschnitten, die entlang der axialen Richtung und der radialen Richtung ausgeschnitten sind, mindestens ein Teil einer Konturlinie der Außenseitenflächen der Verstärkungsteile in axialer Richtung zur Innenseite in radialer Richtung, während er sich zur Außenseite in axialer Richtung erstreckt.

Somit sind für das Pendelrollenlager, bei dem der zentrale ringförmige Teil eine in Bezug auf die Stege hervorstehende Form aufweist (beispielsweise ein Pendelrollenlager, bei dem ein Käfig durch einen Außenring geführt wird), die Verstärkungsteile zur Verstärkung der Verbindungsfestigkeit der Verbindungsteile zwischen den Stegen und dem zentralen ringförmiger Teil an den Positionen an den Außenseiten der Verbindungsteile der Stege gebildet, die mit dem zentralen ringförmigen Teil in radialer Richtung und der Außenseite des zentralen ringförmigen Teils in axialer Richtung verbunden sind. Dadurch wird die Verbindungsfestigkeit der Verbindungsteile zwischen den Stegen und dem zentralen ringförmigen Teil wirksam verbessert, das Risiko eines Bruchs der Stege bei einer Umfangsstoßbelastung durch die Wälzkörper kann deutlich reduziert werden und die Lebensdauer des Pendelrollenlagers kann wirksam verlängert werden.

### Kurzbeschreibung der Zeichnungen

FIG. 1 ist ein schematisches Teilquerschnittsdiagramm eines typischen Pendelrollenlagers.
FIG. 2A ist ein schematisches Teilquerschnittsdiagramm eines Pendelrollenlagers gemäß einer ersten Ausführungsform der vorliegenden Anmeldung, das ein schematisches Querschnittsdiagramm des Pendelrollenlagers, ausgeschnitten entlang einer axialen Richtung und einer radialen Richtung davon, ist. In diesem schematischen Diagramm ist zur Vereinfachung der Erklärung und des Verständnisses ein Teil einer Schnittlinie eines Käfigs weggelassen und alle Teile des Käfigs sind durch gepunktete Linien unterteilt.
FIG. 2B ist ein schematisches Teilquerschnittsdiagramm des Pendelrollenlagers in FIG. 2A, ausgeschnitten entlang einer Linie S-S, das ein schematisches Querschnittsdiagramm des Pendelrollenlagers ist, das entlang einer radialen Richtung der Wälzkörper ausgeschnitten ist und senkrecht zu einer axialen Richtung der Wälzkörper ist.
FIG. 2C ist ein dreidimensionales schematisches Diagramm des Käfigs des Pendelrollenlagers in FIG. 2A.
FIG. 2D ist eine schematische Vorderansicht des Käfigs in FIG. 2B.
FIG. 3A ist ein schematisches Teilquerschnittsdiagramm eines Pendelrollenlagers gemäß einer zweiten Ausführungsform der vorliegenden Anmeldung, das ein schematisches Querschnittsdiagramm des Pendelrollenlagers ist, das entlang der radialen Richtung von Wälzkörpern ausgeschnitten und senkrecht zur axialen Richtung der Wälzkörper ist.
FIG. 3B ist ein dreidimensionales schematisches Diagramm einer Teilstruktur, die den Käfig und die Wälzkörper umfasst, des Pendelrollenlagers in FIG. 3A.
FIG. 4 ist ein schematisches Teilquerschnittsdiagramm eines Käfigs eines Pendelrollenlagers gemäß einer dritten Ausführungsform der vorliegenden Anmeldung.
In diesem schematischen Diagramm ist zur Vereinfachung der Erklärung und des Verständnisses ein Teil einer Schnittlinie eines Käfigs weggelassen und alle Teile des Käfigs sind durch gepunktete Linien unterteilt.
FIG. 5 ist eine schematische Vorderansicht eines Käfigs eines Pendelrollenlagers gemäß einer vierten Ausführungsform der vorliegenden Anmeldung.

### Ausführliche Beschreibung von Ausführungsformen

Im Folgenden werden in Bezug auf die beigefügten Zeichnungen beispielhafte Ausführungsformen der vorliegenden Anmeldung beschrieben. Hierbei sollte beachtet werden, dass diese spezifischen Beschreibungen lediglich dazu dienen, den Fachleuten auf dem Gebiet der Technik zu zeigen, wie die vorliegende Anmeldung umgesetzt werden kann, und dass sie weder als vollständige Aufzählung aller möglichen Arten der vorliegenden Anmeldung noch als Einschränkung des Schutzumfangs der vorliegenden Anmeldung gedacht sind.

Es ist zu beachten, dass sich "axiale Richtung", "radiale Richtung" und "Umfangsrichtung" in der vorliegenden Anmeldung, sofern nicht anders angegeben, auf die axiale Richtung, die radiale Richtung bzw. die Umfangsrichtung eines Pendelrollenlagers (Käfigs) beziehen, wobei sich "Außenseite in axialer Richtung" auf die Seite bezieht, die sich von einer Mittellinie in axialer Richtung des Käfigs entfernt befindet, und sich "Innenseite in axialer Richtung" auf die Seite bezieht, die sich nahe an der Mittellinie in axialer Richtung des Käfigs befindet. Darüber hinaus beziehen sich in der vorliegenden Anmeldung "axiale Richtung der Wälzkörper" und "radiale Richtung der Wälzkörper" auf die axiale Richtung bzw. die radiale Richtung der Wälzkörper, die sich von der zuvor erwähnten "axialen Richtung" und "radialen Richtung" unterscheiden.

Der Aufbau des Pendelrollenlagers gemäß der ersten Ausführungsform der vorliegenden Anmeldung wird nachfolgend zunächst unter Bezugnahme auf die beigefügten Zeichnungen beschrieben.

### (Aufbau des Pendelrollenlagers gemäß der ersten Ausführungsform der vorliegenden Anmeldung)

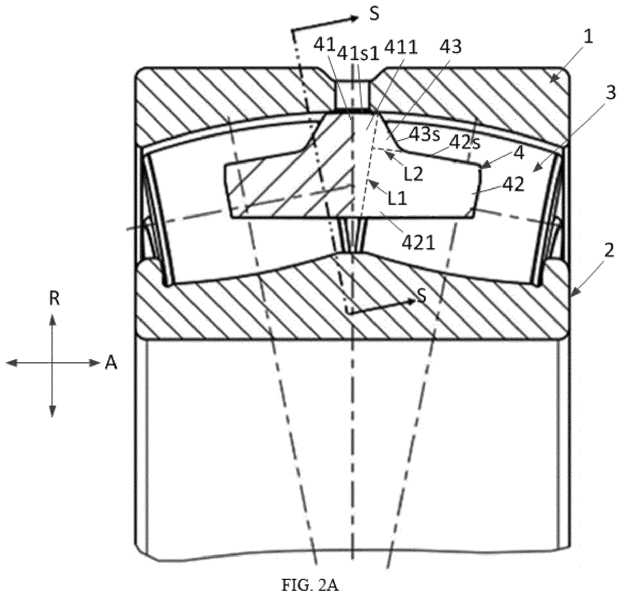

Wie in FIG. 2A bis FIG. 2D gezeigt, umfasst das Pendelrollenlager gemäß der ersten Ausführungsform der vorliegenden Anmeldung einen Außenring 1, einen Innenring 2, eine Vielzahl von Wälzkörpern 3 und einen Käfig 4, die zusammengebaut sind. Das Pendelrollenlager weist eine Selbstausrichtungsfunktion auf.

In der vorliegenden Ausführungsform können sich der Außenring 1 und der Innenring 2 relativ zueinander drehen. Auf dem Außenring 1 ist eine äußere Laufbahn für das Rollen zweier Reihen von Wälzkörpern 3 darin gebildet. In der in FIG. 2A gezeigten Schnittansicht ist eine Konturlinie der äußeren Laufbahn insgesamt als Bogenform gebildet. Anders als am Außenring 1 sind auf dem Innenring 2 zwei innere Laufbahnen für das jeweilige Rollen der beiden Reihen von Wälzkörpern 3 gebildet, und eine innere Laufbahn entspricht einer Reihe von Wälzkörpern 3.

In der vorliegenden Ausführungsform ist die Vielzahl von Wälzkörpern 3 in Taschen zwischen Stegen 42 des Käfigs 4 eingebaut und wird durch den Käfig 4 zwischen dem Außenring 1 und dem Innenring 2 gehalten. Jeder Wälzkörper 3 ist ein Zylinder, dessen Mantellinie eine Kurvenform hat. Die Form der Mantellinie des Zylinders ist an die Formen der äußeren Laufbahn und der entsprechenden inneren Laufbahn angepasst, sodass sich die Wälzkörper 3 reibungslos zwischen dem Außenring 1 und dem Innenring 2 drehen können.

In der vorliegenden Ausführungsform ist der Käfig 4 insgesamt als eine Ringform gebildet. Insbesondere umfasst der Käfig 4 einen zentralen ringförmigen Teil 41, die Stege 42 und Verstärkungsteile 43, die einstückig gebildet sind. Der zentrale ringförmige Teil 41 erstreckt sich durchgehend über einen gesamten Umfang entlang einer Umfangsrichtung C des Käfigs 4. Jeder der Stege 42 erstreckt sich über eine vorbestimmte Länge entlang einer axialen Richtung A des Käfigs 4, und die Stege 42 sind an dem zentralen ringförmigen Teil 41 von zwei Seitenflächen in einer axialen Richtung befestigt. Die Anzahl der Stege 42 auf einer Seite des zentralen ringförmigen Teils 41 in axialer Richtung ist gleich jener der Stege 42 auf der anderen Seite des zentralen ringförmigen Teils 41 in axialer Richtung und die Stege 42 auf einer Seite des zentralen ringförmigen Teils 41 in axialer Richtung sind mit den Stegen 42 auf der anderen Seite des zentralen ringförmigen Teils 41 in axialer Richtung in Umfangsrichtung C ausgerichtet. Auf jeder Seite des zentralen ringförmigen Teils 41 in axialer Richtung ist die Vielzahl von Stegen 42 in Abständen in Umfangsrichtung C angeordnet, so dass Taschen, in denen die Wälzkörper 3 des Pendelrollenlagers eingebaut sind, zwischen jeweils zwei in Umfangsrichtung C benachbarten Stegen 42 gebildet werden. Formen der Taschen und Größen der Taschen in Umfangsrichtung C werden durch Seitenflächen der Stege 42 in Umfangsrichtung definiert. Darüber hinaus umfassen die Stege 42 Fußteile 421, die mit dem zentralen ringförmigen Teil 41 verbunden sind. Der zentrale ringförmige Teil 41 umfasst hervorstehende Teile 411, die zu Positionen hervorstehen, die näher an den Außenseiten in einer radialen Richtung R des Käfigs 4 liegen als die Fußteile 421, Außenumfangsflächen 41 s1 der hervorstehenden Teile 411 (Außenumfangsflächen 41s1 des zentralen ringförmigen Teils 41) sind in ihrer Form an die äußere Laufbahn des Außenrings 1 angepasst (d. h., in der in FIG. 2A gezeigten Schnittansicht sind Konturlinien der Außenumfangsflächen 41 s1 der hervorstehenden Teile 411 und eine Konturlinie der äußeren Laufbahn des Außenrings 1 Kreisbögen mit annähernd gleichen Krümmungsradien), wodurch die Führung des Käfigs 4 durch den Außenring ermöglicht wird.

Die Verstärkungsteile 43 sind an den Außenseiten der Fußteile 421 in radialer Richtung und an den Außenseiten der hervorstehenden Teile 411 in axialer Richtung angeordnet, d. h., die Verstärkungsteile 43 sind an Verbindungsteilen zwischen den Stegen 42 und dem zentralen ringförmigen Teil 41 angeordnet, um zur Erhöhung der strukturellen Festigkeit der Verbindungsteile verwendet zu werden. Die Außenseitenflächen 43s der Verstärkungsteile 43 in axialer Richtung erstrecken sich von den Außenumfangsflächen 41s1 des zentralen ringförmigen Teils 41 zu den Außenseitenflächen (oder Außenumfangsflächen) 42s der Stege 42 in radialer Richtung. Wie in FIG. 2A gezeigt, erstreckt sich an Teilen des Käfigs 4, an denen die Stege 42 angeordnet sind, in Querschnitten, die entlang der axialen Richtung A und der radialen Richtung R ausgeschnitten sind, die Konturlinie der Außenseitenflächen 43s der Verstärkungsteile 43 in axialer Richtung zur Innenseite in radialer Richtung, während sie sich zur Außenseite in axialer Richtung erstreckt. Auf diese Weise kann sichergestellt werden, dass die Verstärkungsteile 43 eine bestimmte Dicke aufweisen, um die strukturelle Festigkeit der Verbindungsteile zuverlässig zu erhöhen. Während sich die Außenseitenflächen 43s der Verstärkungsteile 43 in axialer Richtung von den Stegen 42 in Richtung des zentralen ringförmigen Teils 41 erstrecken, nimmt eine Breite der Außenseitenflächen 42s in radialer Richtung in der Umfangsrichtung C allmählich zu. Auf diese Weise kann sichergestellt werden, dass die Verstärkungsteile 43 ausreichend breit sind, um die strukturelle Festigkeit der vorstehend erwähnten Verbindungsteile zuverlässig zu erhöhen.

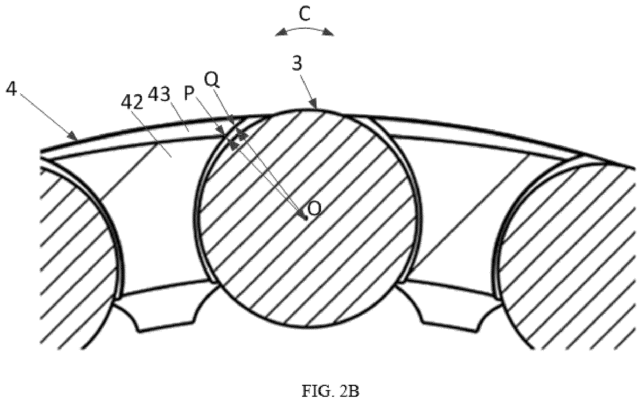

Da die Verstärkungsteile 43 die vorstehend erwähnte Struktur und Formgebung aufweisen, umgeben die Verstärkungsteile 43 neben den Stegen 42, die einen Teil der Flächen der Wälzkörper 3 umgeben, auch einen Teil der Flächen der Wälzkörper 3. Um jedoch im Arbeitsvorgang des Pendelrollenlagers einen durch Reibung zwischen den Verstärkungsteilen 43 und den Wälzkörpern 3 verursachten Verschleiß zu verhindern, sind die Stege 42 und die Verstärkungsteile 43 derart ausgestaltet, dass die Wälzkörper 3 im Arbeitsvorgang der in den Taschen montierten Wälzkörper nur mit den Seitenflächen der Stege 42 in Umfangsrichtung in Kontakt kommen, jedoch nicht mit den Seitenflächen der Verstärkungsteile 43 in der Umfangsrichtung in Kontakt kommen. Daher ist es vorzuziehen, die folgenden Bedingungen zu erfüllen. Die Seitenflächen der Stege 42 in Umfangsrichtung sind als an die Konturen der Wälzkörper 3 angepasste Formen gebildet. Wie in FIG. 2B gezeigt, sind in jedem der Querschnitte, die entlang der radialen Richtung der Wälzkörper ausgeschnitten sind und senkrecht zur axialen Richtung der Wälzkörper sind, die Konturlinien der Seitenflächen der Verstärkungsteile 43 in der Umfangsrichtung Kurven. Ferner gilt in jedem der vorstehend erwähnten Querschnitte unter der Annahme, dass ein Kreismittelpunkt der Querschnitte der Wälzkörper 3 O ist, ein äußerster Punkt der Konturlinie in radialer Richtung der Seitenflächen der Stege 42 in Umfangsrichtung P ist und jeder Punkt auf der Konturlinie der Seitenflächen der Verstärkungsteile 43 in Umfangsrichtung, der den Stegen 42 entspricht, Q ist, dass ein Abstand zwischen Punkt O und Punkt Q immer größer als ein Abstand zwischen Punkt O und Punkt P ist. Selbst wenn die Wälzkörper 3 in radialer Richtung und/oder Umfangsrichtung laufen, kommen die Verstärkungsteile 43 auf diese Weise nicht mit den Wälzkörpern 3 in Kontakt und verursachen keinen Verschleiß.

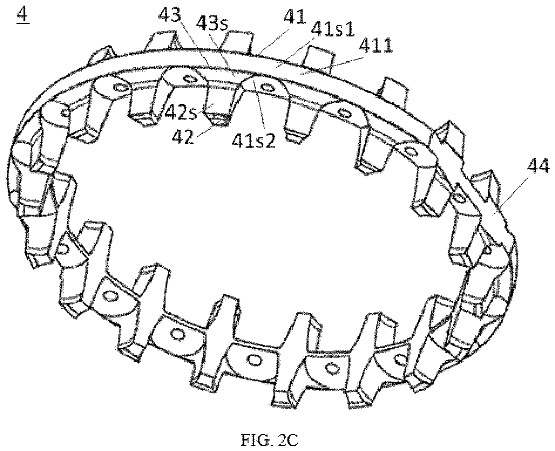

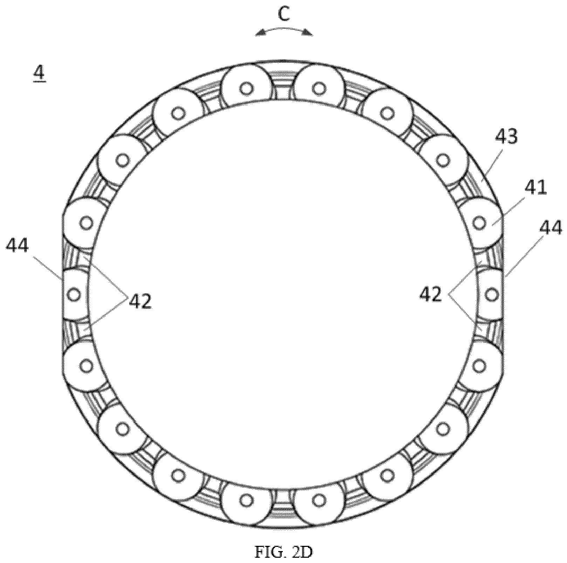

Darüber hinaus sind, wie in FIG. 2C und FIG. 2D gezeigt, an einem Außenumfangsabschnitt des Käfigs 4 zwei fehlende Teile 44 am Käfig 4 gebildet. Die beiden fehlenden Teile 44 sind in Bezug auf einen Kreismittelpunkt des Käfigs 4 um 180 Grad ausgelenkt, um den Zusammenbau des Pendelrollenlagers durch Ausnutzung der beiden fehlenden Teile 44 zu erleichtern. Die zentralen Positionen der beiden fehlenden Teile 44 liegen zwischen zwei benachbarten Stegen 42, wodurch die nachteiligen Auswirkungen der fehlenden Teile 44 auf die Festigkeit der Stege 42 und die Verstärkungsteile 43 des Käfigs 4 minimiert werden. Wie in FIG. 2D gezeigt, sind in der Vorderansicht des Käfigs 4 entlang der axialen Richtung A gesehen die Konturlinien von Teilen des Käfigs 4, an denen die fehlenden Teile 44 gebildet sind, gerade Linien.

Der Aufbau eines Pendelrollenlagers gemäß einer zweiten Ausführungsform der vorliegenden Anmeldung wird nachfolgend unter Bezugnahme auf die beigefügten Zeichnungen beschrieben.

### (Aufbau eines Pendelrollenlagers gemäß einer zweiten Ausführungsform der vorliegenden Anmeldung)

Die Grundstruktur des Pendelrollenlagers gemäß der zweiten Ausführungsform der vorliegenden Anmeldung ist ungefähr dieselbe wie die Grundstruktur des Pendelrollenlagers gemäß der ersten Ausführungsform der vorliegenden Anmeldung, und die Unterschiede zwischen diesen werden nachstehend beschrieben.

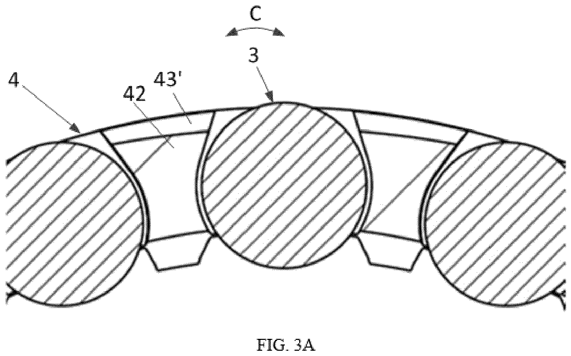

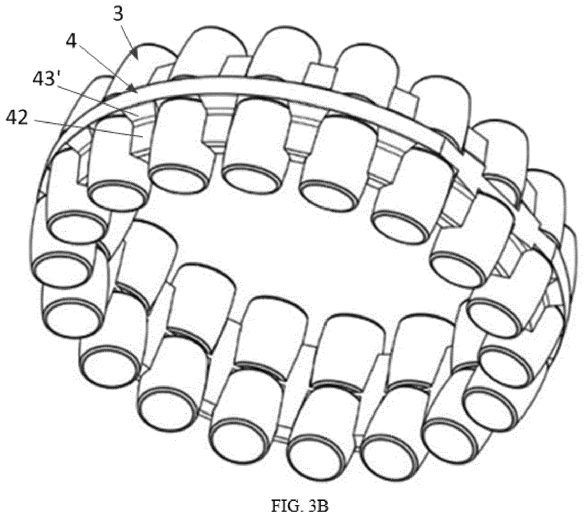

Wie in FIG. 3A und FIG. 3B gezeigt, sind in jedem der Querschnitte, die entlang der radialen Richtung der Wälzkörper ausgeschnitten sind und senkrecht zur axialen Richtung der Wälzkörper sind, die Konturlinien der Seitenflächen der Verstärkungsteile 43' in der Umfangsrichtung eher gerade Linien als die Kurven in der ersten Ausführungsform. Auf diese Weise kann auch der gleiche technische Effekt wie bei den Verstärkungsteilen 43 in der ersten Ausführungsform erzielt werden und gleichzeitig kann weiter sichergestellt werden, dass die Verstärkungsteile 43' nicht in unerwünschten Kontakt mit den Wälzkörpern 3 kommen.

Der Aufbau eines Pendelrollenlagers gemäß einer dritten Ausführungsform der vorliegenden Anmeldung wird nachfolgend unter Bezugnahme auf die beigefügten Zeichnungen beschrieben.

### (Aufbau eines Pendelrollenlagers gemäß einer dritten Ausführungsform der vorliegenden Anmeldung)

Die Grundstruktur des Pendelrollenlagers gemäß der dritten Ausführungsform der vorliegenden Anmeldung ist ungefähr dieselbe wie die Grundstruktur des Pendelrollenlagers gemäß der ersten Ausführungsform der vorliegenden Anmeldung, und die Unterschiede zwischen diesen werden nachstehend beschrieben.

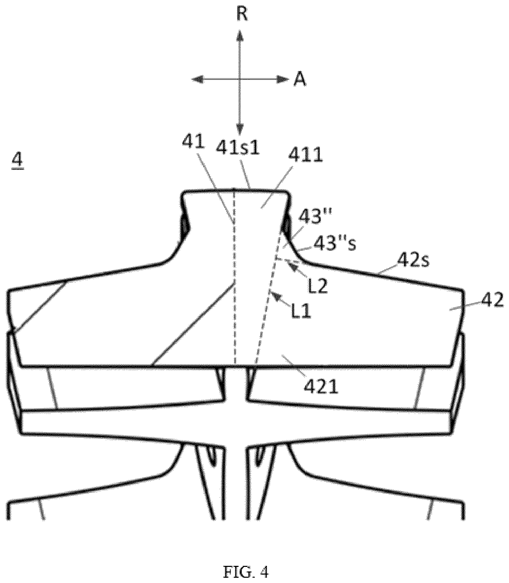

Wie in FIG. 4 gezeigt, erstrecken sich die Außenflächen 43"s der Verstärkungsteile 43" in der radialen Richtung nicht von Außenumfangsflächen 41s1 der hervorstehenden Teile 411, sondern beginnen, sich von ungefähr zentralen Positionen der Außenseitenflächen der hervorstehenden Teile 411 in axialer Richtung zu erstrecken. Auf diese Weise kann auch der gleiche technische Effekt wie bei den Verstärkungsteilen 43 in der ersten Ausführungsform erzielt werden und gleichzeitig kann weiter sichergestellt werden, dass der Verstärkungsteil 43" nicht in unerwünschten Kontakt mit den Wälzkörpern 3 kommt.

Der Aufbau eines Pendelrollenlagers gemäß einer vierten Ausführungsform der vorliegenden Anmeldung wird nachfolgend unter Bezugnahme auf die beigefügten Zeichnungen beschrieben.

### (Aufbau des Pendelrollenlagers gemäß der vierten Ausführungsform der vorliegenden Anmeldung)

Die Grundstruktur des Pendelrollenlagers gemäß der vierten Ausführungsform der vorliegenden Anmeldung ist ungefähr dieselbe wie die Grundstruktur des Pendelrollenlagers gemäß der ersten Ausführungsform der vorliegenden Anmeldung, und die Unterschiede zwischen diesen werden nachstehend beschrieben.

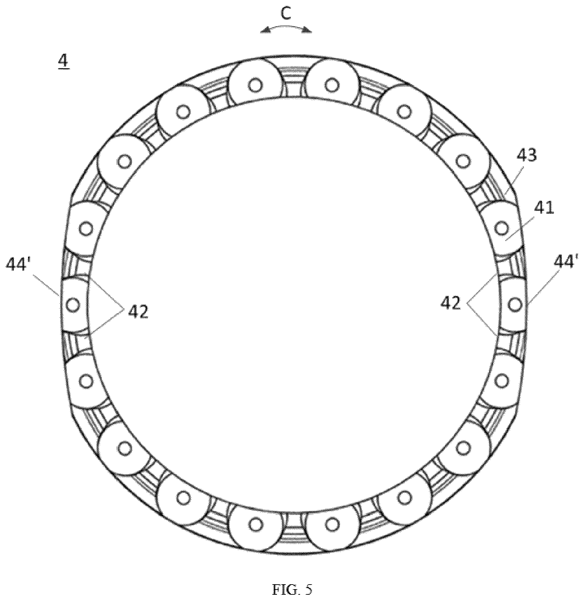

Wie in FIG. 5 gezeigt, sind in der Vorderansicht eines Käfigs 4 entlang einer axialen Richtung A gesehen die Konturlinien von Teilen des Käfigs 4, an denen fehlende Teile 44' gebildet sind, Kurven, die zur Außenseite hin hervorstehen. Verglichen mit den fehlenden Teilen 44, deren Konturlinien die geraden Linien in der ersten Ausführungsform sind, sind die fehlenden Teile 44' in der vorliegenden Ausführungsform für den Einbau des Pendelrollenlagers förderlicher. Selbstverständlich ist die vorliegende Anmeldung nicht auf die vorstehend erwähnten Ausführungsformen beschränkt und der Fachmann kann im Rahmen der Lehre der vorliegenden Anmeldung verschiedene Modifikationen an den vorstehend erwähnten Ausführungsformen vornehmen, ohne vom Schutzumfang der vorliegenden Anmeldung abzuweichen. Hierzu sind auch die folgenden Erläuterungen erforderlich.
i. Im Stand der Technik wird nicht klar dargelegt, dass bei einem bestehenden Pendelrollenlager, das einen Außenring zur Führung eines Käfigs verwendet, an Teilen des Käfigs, an denen keine Stege angeordnet sind, in Querschnitten, die entlang der axialen Richtung und radialen Richtung ausgeschnitten sind, sich die Konturlinien der beiden Seitenflächen eines zentralen ringförmigen Teils in axialer Richtung zur Innenseite in radialer Richtung erstrecken, während sie sich zur Innenseite in axialer Richtung erstrecken, d. h., die Seitenflächen des zentralen ringförmigen Teils in axialer Richtung und die Stirnflächen der Wälzkörper auf den entsprechenden Seiten sind parallel (siehe FIG. 2A). Um eine mögliche Störung der Wälzkörper zu vermeiden, weisen die beiden Seitenflächen der hervorstehenden Teile des zentralen ringförmigen Teils in axialer Richtung unabhängig davon, an welchen Teilen die Stege angeordnet sind oder nicht, dementsprechend ebenfalls Formen auf, die sich zur Innenseite in radialer Richtung erstrecken, während sie sich zur Innenseite in axialer Richtung erstrecken. Daher versteht es sich, dass auf beiden Seiten der hervorstehenden Teile des zentralen ringförmigen Teils des bestehenden Pendelrollenlagers keine derartigen Verstärkungsteile 43, 43', 43", wie in der vorliegenden Anmeldung beschrieben, vorhanden sind. Verglichen mit dem vorstehenden Stand der Technik erhöhen die Verstärkungsteile 43, 43', 43" der vorliegenden Anmeldung offensichtlich die Verbindungsfestigkeit von Verbindungsteilen zwischen den Stegen 42 und dem zentralen ringförmigen Teil 41.
   Für die Lösung der vorliegenden Anmeldung, um den Aufbau und die Positionen der Verstärkungsteile 43 und 43" in FIG. 2A und FIG. 4 zu veranschaulichen, ist in den entlang der axialen Richtung A und der radialem Richtung R ausgeschnittenen Querschnitten die Struktur des Käfigs 4 auf Grundlage der vorstehenden Beschreibungen durch gestrichelte Linien L1 und L2 unterteilt. Insbesondere ist die gestrichelte Linie L1 eine gestrichelte Linie, die von einem Endpunkt der Außenseite in der axialen Richtung einer Konturlinie der Außenumfangsflächen 41s1 des Käfigs 4 gezogen wird und parallel zu einer Konturlinie der Endflächen der Wälzkörper 3 verläuft; der Abschnitt des Käfigs 4, der näher an der Innenseite in axialer Richtung liegt als die gestrichelte Linie L1, ist der zentrale ringförmige Teil 41; die gestrichelte Linie L2 ist eine verlängerte Linie, die von der Konturlinie der Außenseitenflächen 42s der Stege 42 in radialer Richtung zur Innenseite in axialer Richtung gezogen wird, so dass sich die Verstärkungsteile 43, 43" auf der Außenseite der gestrichelten Linie L1 in axialer Richtung und der Außenseite der gestrichelten Linie L2 in radialer Richtung befinden. Es versteht sich, dass die Fußteile 421 Abschnitte der Stege 42 sind, die einer Länge der gestrichelten Linie L2 entsprechen und sich auf der Innenseite der gestrichelten Linie L2 in radialer Richtung befinden.
ii. Obwohl in den vorstehenden Ausführungsformen beschrieben wurde, dass die Stege 42 auf zwei Seiten des zentralen ringförmigen Teils 41 in axialer Richtung in einer Umfangsrichtung C ausgerichtet sind, ist die vorliegende Anmeldung nicht darauf beschränkt. Beispielsweise können die Stege 42 auf den beiden Seiten des zentralen ringförmigen Teils 41 in axialer Richtung auch in Umfangsrichtung C versetzt angeordnet sein.
iii. Obwohl in den vorstehenden Ausführungsformen beschrieben wurde, dass sich die Mittelpunkte der fehlenden Teile 44 zwischen zwei Stegen 42 befinden, ist die vorliegende Anmeldung nicht darauf beschränkt. Wenn die Anzahl der Stege 42 beispielsweise eine ungerade Zahl ist, können sich die Mittelpunkte der fehlenden Teile an Teilen befinden, die mit den Stegen 42 ausgerichtet sind.
iv. Auch wenn dies in den vorstehenden Ausführungsformen nicht explizit beschrieben ist, versteht es sich, dass der Käfig in der vorliegenden Anmeldung beispielsweise aus Metall wie Messing oder Stahl bestehen kann.
v. Obwohl in den Zeichnungen, die den vorstehenden Ausführungsformen entsprechen, gezeigt ist, dass konkave Teile in der Mitte von Teilen, die Taschen entsprechen, des zentralen ringförmigen Teils 41 gebildet werden, die während der Verarbeitung erzeugt werden, gehört dies nicht zu den technischen Punkten, auf die sich die vorliegende Anmeldung konzentriert.

### Beschreibung von Bezugszeichen

- 10: Außenring
- 20: Innenring
- 30: Wälzkörper
- 40: Käfig
- 1: Außenring
- 2: Innenring
- 3: Wälzkörper
- 4: Käfig
- 41: zentraler ringförmiger Teil
- 411: hervorstehender Teil
- 41s1: Außenumfangsfläche
- 41s2: Außenseitenfläche in axialer Richtung
- 42: Sturz
- 421: Fußteil
- 42s: Außenseitenfläche in radialer Richtung
- 43, 43', 43": Verstärkungsteil
- 43s, 43"s: Außenseitenfläche in axialer Richtung
- 44, 44": fehlendes Teil
- O: Kreismittelpunkt der Querschnitte der Wälzkörper
- P: äußerster Punkt der Konturlinie in radialer Richtung der Seitenflächen der Stege in Umfangsrichtung
- Q: jeder Punkt auf der Konturlinie der Seitenflächen der Verstärkungsteile in Umfangsrichtung
- A: axiale Richtung
- R: radiale Richtung
- C: Umfangsrichtung

## Patentansprüche

1. Käfig für ein Pendelrollenlager, wobei der Käfig (4) als eine Ringform gebildet ist und einen zentralen ringförmigen Teil (41) und eine Vielzahl von aneinander befestigten Stegen (42) umfasst, wobei sich der zentrale ringförmige Teil (41) durchgehend über einen gesamten Umfang entlang einer Umfangsrichtung (C) des Käfigs (4) erstreckt, sich jeder der Stege (42) um eine vorbestimmte Länge entlang einer axialen Richtung (A) des Käfigs (4) erstreckt und die Stege (42) in axialer Richtung an zwei Seitenflächen des zentralen ringförmigen Teils (41) befestigt sind; die Vielzahl von Stegen (42) auf jeder Seite des zentralen ringförmigen Teils (41) in der axialen Richtung in Abständen in der Umfangsrichtung (C) angeordnet ist, so dass Taschen, in denen Wälzkörper (3) des Pendelrollenlagers eingebaut sind, zwischen jeweils zwei in Umfangsrichtung (C) benachbarten Stegen (42) gebildet werden;
der zentrale ringförmige Teil (41) hervorstehende Teile (411) umfasst, die zu Positionen hervorstehen, die näher an den Außenseiten in einer radialen Richtung (R) des Käfigs (4) liegen als die Stege (42), wobei der Käfig (4) ferner Verstärkungsteile (43, 43', 43") umfasst, die am zentralen ringförmigen Teil (41) und den Stegen (42) befestigt sind, und die Verstärkungsteile (43, 43', 43") an Außenseiten der Stege (42) in radialer Richtung angeordnet sind und an Außenseiten der hervorstehenden Teile (411) in axialer Richtung angeordnet sind;
an Teilen des Käfigs (4), an denen die Stege (42) angeordnet sind, in Querschnitten, die entlang der axialen Richtung (A) und der radialen Richtung (R) ausgeschnitten sind, sich mindestens ein Teil einer Konturlinie von Außenseitenflächen (43s, 43"s) der Verstärkungsteile (43, 43', 43") in axialer Richtung zur Innenseite in radialer Richtung erstreckt, während er sich zur Außenseite in axialer Richtung erstreckt.

2. Käfig für das Pendelrollenlager nach Anspruch 1, **dadurch gekennzeichnet, dass** sich die Konturlinie der Außenseitenflächen (43s, 43"s) in axialer Richtung von einer Außenumfangsfläche (41s1) des zentralen ringförmigen Teils (41) zu Außenseitenflächen (42s) der Stege (42) in radialer Richtung erstreckt.

3. Käfig für das Pendelrollenlager nach Anspruch 1 oder Anspruch 2, **dadurch gekennzeichnet, dass** dadurch, dass sich die Außenseitenflächen (43s, 43"s) in axialer Richtung von den Stegen (42) zum zentralen ringförmigen Teil (41) erstrecken, eine Breite der Außenseitenflächen (43s, 43"s) in axialer Richtung in der Umfangsrichtung (C) allmählich zunimmt.

4. Käfig für das Pendelrollenlager nach einem der Ansprüche 1 bis 3, **dadurch gekennzeichnet, dass** die Anzahl der Stege (42) auf einer Seite des zentralen ringförmigen Teils (41) in axialer Richtung gleich jener der Stege (42) auf der anderen Seite des zentralen ringförmigen Teils (41) in axialer Richtung ist und die Stege (42) auf einer Seite des zentralen ringförmigen Teils (41) in axialer Richtung mit den Stegen (42) auf der anderen Seite des zentralen ringförmigen Teils (41) in axialer Richtung in Umfangsrichtung (C) ausgerichtet sind.

5. Käfig für das Pendelrollenlager nach einem der Ansprüche 1 bis 4, **dadurch gekennzeichnet, dass** an einem Außenumfangsabschnitt des Käfigs (4) zwei fehlende Teile (44, 44') am Käfig (4) gebildet sind, und die beiden fehlenden Teile (44, 44') in Bezug auf einen Kreismittelpunkt des Käfigs (4) um 180 Grad ausgelenkt sind.

6. Käfig für das Pendelrollenlager nach Anspruch 5, **dadurch gekennzeichnet, dass** eine Mittelposition jedes der fehlenden Teile (44, 44') zwischen zwei in Umfangsrichtung (C) benachbarten Stegen (42) angeordnet ist.

7. Käfig für das Pendelrollenlager nach Anspruch 5 oder Anspruch 6, **dadurch gekennzeichnet, dass** in einer Vorderansicht entlang einer axialen Richtung (A) betrachtet die Konturlinien von Teilen des Käfigs (4), an denen die fehlenden Teile (44, 44') gebildet sind, gerade Linien oder Kurven sind, die zur Außenseite in radialer Richtung hervorstehen.

8. Käfig für Pendelrollenlager nach einem der Ansprüche 1 bis 7, **dadurch gekennzeichnet, dass** an den Teilen des Käfigs (4), an denen die Stege (42) angeordnet sind, in Querschnitten, die entlang der radialen Richtung von Wälzkörpern ausgeschnitten sind und senkrecht zur axialen Richtung der Wälzkörper sind, Konturlinien der Seitenflächen der Verstärkungsteile (43, 43', 43") in Umfangsrichtung gerade Linien oder Kurven sind.

9. Pendelrollenlager, das einen Käfig (4) für ein Pendelrollenlager nach einem der Ansprüche 1 bis 8 umfasst.

10. Pendelrollenlager nach Anspruch 9, **dadurch gekennzeichnet, dass** das Pendelrollenlager ferner einen Außenring (1), einen Innenring (2) und eine Vielzahl von Wälzkörpern (3) umfasst, wobei die Wälzkörper (3) in Taschen des Käfigs (4) eingebaut sind und durch den Käfig (4) zwischen dem Außenring (1) und dem Innenring (2) gehalten werden und eine Außenumfangsfläche (41s1) eines zentralen ringförmigen Teils (41) des Käfigs (4) in ihrer Form an eine Laufbahn des Außenrings (1) angepasst ist.

11. Pendelrollenlager nach Anspruch 10, **dadurch gekennzeichnet, dass** die Stege (42) und die Verstärkungsteile (43, 43', 43") derart ausgestaltet sind, dass die Wälzkörper (3) nur mit den Stegen (42) in Kontakt kommen können und im Arbeitsvorgang der Wälzkörper (3), die in den Taschen eingebaut sind, von den Verstärkungsteilen (43, 43', 43") beabstandet sind.

12. Pendelrollenlager nach einem der Ansprüche 9 bis 11, **dadurch gekennzeichnet, dass** die Seitenflächen der Stege (42) in Umfangsrichtung als an die Konturen der Wälzkörper (3) angepasste Formen gebildet sind.
In jedem der Querschnitte, die entlang der radialen Richtung der Wälzkörper ausgeschnitten sind und senkrecht zur axialen Richtung der Wälzkörper sind, gilt unter der Annahme, dass ein Kreismittelpunkt der Querschnitte der Wälzkörper (3) O ist, ein äußerster Punkt der Konturlinie in radialer Richtung der Seitenflächen der Stege (42) in Umfangsrichtung P ist und jeder Punkt auf der Konturlinie der Umfangsseitenflächen der Verstärkungsteile (43, 43', 43"), der den Stegen (42) entspricht, Q ist, als erfüllt, dass ein Abstand zwischen Punkt O und Punkt Q immer größer ist als ein Abstand zwischen Punkt O und Punkt P.
